# EUROPÄISCHE PATENTSCHRIFT

(11) **EP 1 888 880 B1**
(45) Veröffentlichungstag und Bekanntmachung des Hinweises auf die Patenterteilung: **05.11.2008**
(21) Anmeldenummer: 06725181.9
(22) Anmeldetag: 21.03.2006
(51) Int. Cl.: F01D 9/02, F01D 11/00, F02C 7/28, F16J 15/34

(54) **GASTURBINE MIT EINER SPALTSPERRVORRICHTUNG**
GAS TURBINE WITH A GAP BLOCKING DEVICE
TURBINE A GAZ DOTEE D'UN DISPOSITIF DE BARRAGE D'ECARTEMENT

(30) Priorität: 08.06.2005 EP 05012349
(43) Veröffentlichungstag der Anmeldung: 20.02.2008
(73) Patentinhaber: SIEMENS AKTIENGESELLSCHAFT, 80333 München (DE)
(72) Erfinder: IRMISCH, Stefan, Jupiter, Florida 33458 (US)
(86) Internationale Anmeldenummer: PCT/EP2006/060892
(87) Internationale Veröffentlichungsnummer: WO 2006/131405

(56) Entgegenhaltungen:
- US-A- 3 938 906
- US-A- 4 103 903
- US-A- 4 196 912
- US-A- 5 340 273
- US-A1- 2005 063 816

## Beschreibung

Die Erfindung betrifft eine Gasturbine mit einer eine Strömung begrenzenden Kanalwand, die einen ersten und einen zweiten Wandabschnitt aufweist, wobei einer der Wandabschnitte Teil einer Brennkammer der Gasturbine und der andere der Wandabschnitte Teil eines ringförmigen Heißgaskanals einer Turbineneinheit ist und wobei die zwei benachbarten Wandabschnitte unter Bildung eines Spaltes einander stirnseitig gegenüberliegen.

Es ist bekannt, dass in Gasturbinen in einer Brennkammer ein Brennstoff-Luft-Gemisch zu einem Heißgas verbrannt wird, welches anschließend in einer Turbineneinheit zur Erzeugung von mechanischer Energie eingesetzt wird. Dabei wird das Heißgas von einer Brennkammer in einen ringförmigen Heißgaskanal überführt, in dem am Gehäuse angeordnete Turbinenleitschaufeln und am Rotor angeordnete Turbinenlaufschaufeln die Umsetzung der Strömungsenergie des Heißgases in mechanische Energie des Rotors bewirken. Im Übergangsbereich zwischen Brennkammer und ringförmigem Heißgaskanal ist konstruktionsbedingt ein umlaufender Axialspalt vorhanden, dessen Spaltmaß aufgrund der temperaturbedingten Dehnungen, die beim Betrieb der Gasturbine auftreten, variiert und der gegen das Eindringen von Heißgas durch das Ausblasen von Sperrluft geschützt wird. Insbesondere wird im Spalt, der zwischen dem von dem Heißgaskanal zugewandten Ende der Brennkammer und den Plattformen von Leitschaufeln der ersten Turbinenstufe bzw. einem Bauteil zwischen Brennkammer und Leitschaufel gebildet ist, Sperrluft ausgeblasen.

Diese Methode zur Sperrung des Spaltes durch das Ausblasen von Sperrluft wirkt sich negativ auf den Wirkungsgrad der Gasturbine sowie auf die Verbrennungsstabilität innerhalb der Brennkammer aus, da die Sperrluft der zur Verbrennung bereitgestellten Verdichterluft entnommen wird. Insbesondere in Folge von unterschiedlichen Wärmedehnungen der am Spalt beteiligten Bauteile variiert der resultierende Spalt gegenüber dem im Kaltzustand der Gasturbine. Dies erfordert erhebliche Sperrluftmassenströme, da diese für den größtmöglichen auftretenden Spalt ausgelegt werden. Falls ein noch größerer Spalt als berechnet auftritt, kann im schlimmsten Fall eine unzureichende Abdichtung eintreten, die zu einem lokalen Heißgaseinbruch bzw. -eintritt in den Spalt führt, was zu einer abgesenkten Lebensdauer der den Spalt umgebenden Bauteile führt.

Eine Gasturbine gemäß dem Stand der Technik ist aus Dokument US 2005/063816 bekannt.

Aufgabe der Erfindung ist es daher, eine Gasturbine mit einer Spaltsperrvorrichtung für eine eine Strömung begrenzende Kanalwand anzugeben, die einen weiter verbesserten Wirkungsgrad und die eine weiter verbesserte Verbrennungsstabilität sowie deren Kanalwand eine gesteigerte Lebensdauer aufweist.

Entsprechend den im Patentanspruch 1 angegebenen Merkmalen wird die auf die gattungsgemäße Gasturbine gerichtete Aufgabe gelöst, indem zum Abdichten des Spaltes aus dem ersten Wandabschnitt stirnseitig ein sich in den Spalt erstreckendes und quer dazu verschiebbares Absperrelement herausragt, welches eine im ersten Wandabschnitt angeordnete Kolbenfläche und eine der Kolbenfläche gegenüberliegende Dichtstruktur umfasst, welche Dichtstruktur mittels eines auf die Kolbenfläche einwirkenden Druckmediums an einem stirnseitig angeordneten Dichtbereich des zweiten Wandabschnittes anpressbar ist.

Die Erfindung geht von der Erkenntnis aus, dass ein sich quer in den Spalt erstreckendes, verschiebbares Absperrelement das Eindringen von Heißgas stets wirkungsvoll verhindern kann, obwohl aufgrund von betriebsbedingten Wärmedehnungen sich die stirnseitig gegenüberliegenden Wandabschnitte voneinander weg oder aufeinander zu bewegen und den Spalt in seiner Größe variieren können. Damit das Absperrelement eine bestmögliche Abdichtung des variierenden Spaltes erreichen kann, ist das Absperrelement gegenüber dem ersten Wandabschnitt verschiebbar, damit es mit seiner Dichtstruktur an einem stirnseitig angeordneten Dichtbereich des zweiten Wandabschnitts stets anpressbar ist. Der dazu nötige Anpressdruck wird durch ein Druckmedium erzeugt, welches einem im ersten Wandabschnitt befindlichen Kolbenraum zuführbar ist. Das Absperrelement ragt mit seiner Kolbenfläche in den Kolbenraum hinein, so dass das Druckmedium auf die Kolbenfläche einwirken und damit das Absperrelement am Dichtbereich stets anliegend nachführen kann.

Die Erfindung wendet sich demnach von der Methode ab, bei der das Eindringen von Heißgas in den Spalt lediglich durch das Ausblasen von Sperrluft verhindert wird.

Aufgrund der Verschiebbarkeit des Absperrelements innerhalb des ersten Wandabschnittes, quer zum Spalt und in den Spalt kann die eine solche Spaltsperrvorrichtung der Gasturbine den Spalt trotz veränderbarer Spaltmaße jederzeit wirkungsvoll abdichten.

Außerdem kann Sperrluft eingespart und anstelle zum Sperren des Spaltes dem Verbrennungsvorgang der Gasturbine zusätzlich zur Verfügung gestellt werden, was beim Betrieb der Gasturbine den Wirkungsgrad weiter erhöht. Darüber hinaus kann sich dadurch die Verbrennungsstabilität verbessern.

Vorteilhafte Ausgestaltungen sind in den Unteransprüchen angegeben.

Vorzugsweise liegen die Dichtstruktur des Absperrelements und der stirnseitig am zweiten Wandabschnitt vorgesehene Dichtbereich flächig aneinander. Hierdurch wird die Dichtwirkung des Absperrelementes weiter erhöht, was das Eindringen von Heißgas weiter erschwert.

In einer vorteilhaften Ausgestaltung sind die beiden benachbarten Wandabschnitte Teil einer im Querschnitt ringförmigen Kanalwand. Der Spalt ist somit in Umfangsrichtung umlaufend. Dies ermöglicht eine umlaufende Spaltsperrvorrichtung, bei der zweckmäßiger Weise die Kolbenfläche, die Dichtstruktur und der Kolbenraum jeweils ringförmig ausgebildet sind, so dass an jeder Stelle des Spaltes eine besonders wirkungsvolle Vorkehrung zur Verhinderung des Eindringens von Heißgas in den Spalt gewährleistet werden kann.

Eine besonders zuverlässige und wirksame Spaltsperrvorrichtung wird erreicht, wenn das Absperrelement einen im ersten Wandabschnitt angeordneten Kolbenraum mittels einer zwischen dem Absperrelement und dem ersten Wandabschnitt vorgesehene Gleitdichtung verschließt, um den für die Verschiebung erforderlichen Druckaufbau zu ermöglichen bzw. zu verbessern. Da als Druckmedium vorzugsweise Verdichterluft eingesetzt wird, kann dadurch der nötige Druck besonders einfach bereitgestellt werden, ohne den Wirkungsgrad der Gasturbine bzw. deren Verbrennungsstabilität zu vermindern. Eine besonders wirksame Gleitdichtung umfasst mindestens eine am Absperrelement oder im ersten Wandabschnitt vorgesehene Dichtspitze.

Die Erfindung wird anhand einer Zeichnung näher erläutert.
Es zeigen:
- FIG 1: eine Gasturbine in einem Längsteilschnitt,
- FIG 2: das Detail II aus FIG 1, der Übergangsbereich einer Ringbrennkammer in einen Heißgaskanal der Turbine nach dem Stand der Technik,
- FIG 3: eine erfindungsgemäße Spaltsperrvorrichtung mit einem kolbenartigen Absperrelement im Querschnitt,
- FIG 4: ein erster Wandabschnitt mit dem kolbenartigen Absperrelement in perspektivischer Ansicht und
- FIG 5: ein Kolbendichtelement als Absperrelement in perspektivischer Ansicht.

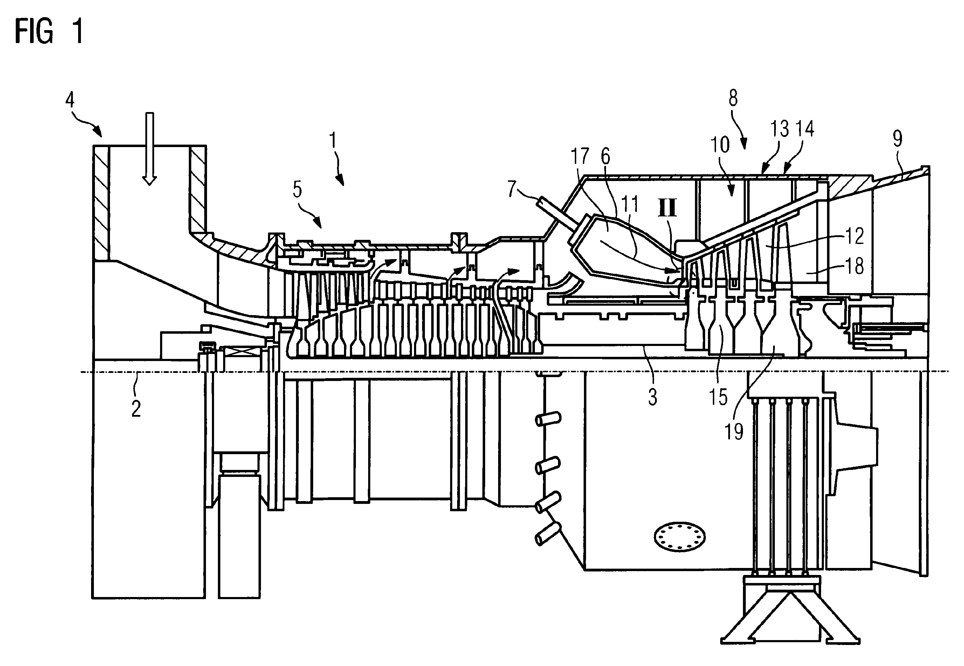

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Heißgaskanal 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgaskanal 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 mittels einer Turbinenscheibe am Rotor 3 angebracht sind. An dem Rotor 3 ist ein Generator oder eine Arbeitsmaschine (nicht dargestellt) angekoppelt.

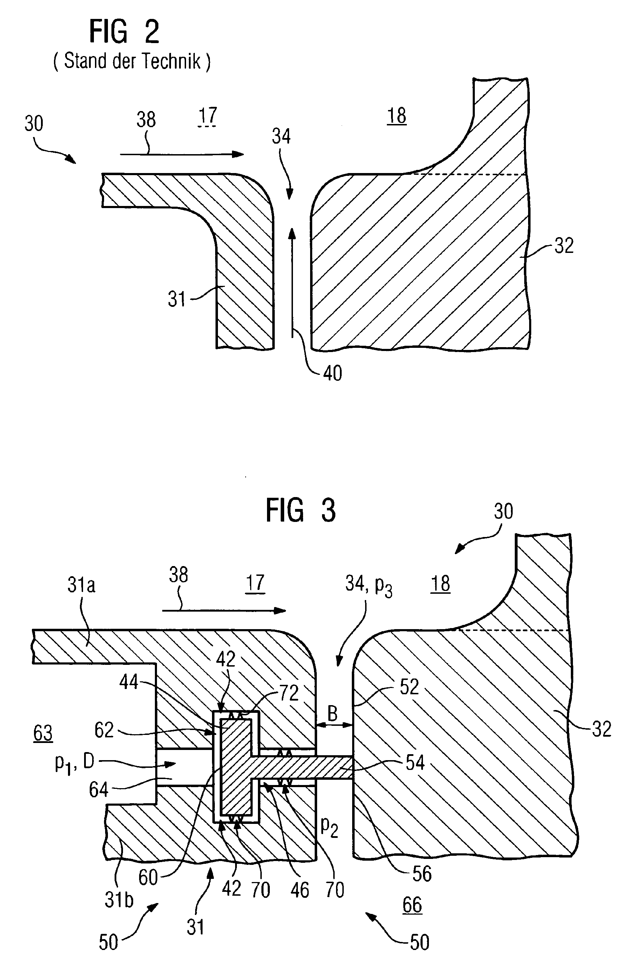

FIG 2 zeigt als Ausschnitt eine eine Strömung begrenzende Kanalwand 30, mit zwei benachbarten Wandabschnitten 31, 32, die unter Bildung eines Spaltes 34 einander stirnseitig gegenüber liegen. Die Wandabschnitte 31, 32 der Kanalwand 30, leiten eine Heißgasströmung 38. Gemäß Ausschnitt II der FIG 1 ist eine solche Anordnung im Übergangsbereich von dem Verbrennungsraum 17 der Ringbrennkammer 6 der Gasturbine 1 zu dem ringförmigen Heißgaskanal 18 der Turbineneinheit 8 vorhanden. Der erste Wandabschnitt 31 kann ein keramisches oder ein metallisches Hitzeschild sein, wohingegen der zweite Wandabschnitt 32 beispielsweise von einer Plattform der Leitschaufel 12 der ersten Turbinenstufe 10 gebildet sein kann.

Um den Spalt 34 gegen Einzug von Heißgas 11 zu sperren, wird beim Stand der Technik lediglich aus diesem mit erhöhtem Druck Sperrluft 40 ausgeblasen (FIG 2).

FIG 3 zeigt eine erfindungsgemäße Spaltsperrvorrichtung 50 für die Kanalwand 30, welche die Heißgasströmung 38 begrenzend führt. Der erste Wandabschnitt 31 ist stirnseitig in zwei Teilelemente 31a und 31b durch parallel zur Heißgasströmung 38 verlaufende und eine mit Nuten 42 versehene Fuge 46 geteilt, um ein parallel zur Heißgasströmung 38 und in den Spalt 34 verschiebbares Absperrelement 44 darin zumindest teilweise aufzunehmen. Die Nut 42 im Wandabschnitt 31 kann durch Fräsen hergestellt werden, wobei das Absperrelement 44 dann in Umfangsrichtung eingeschoben werden muss.

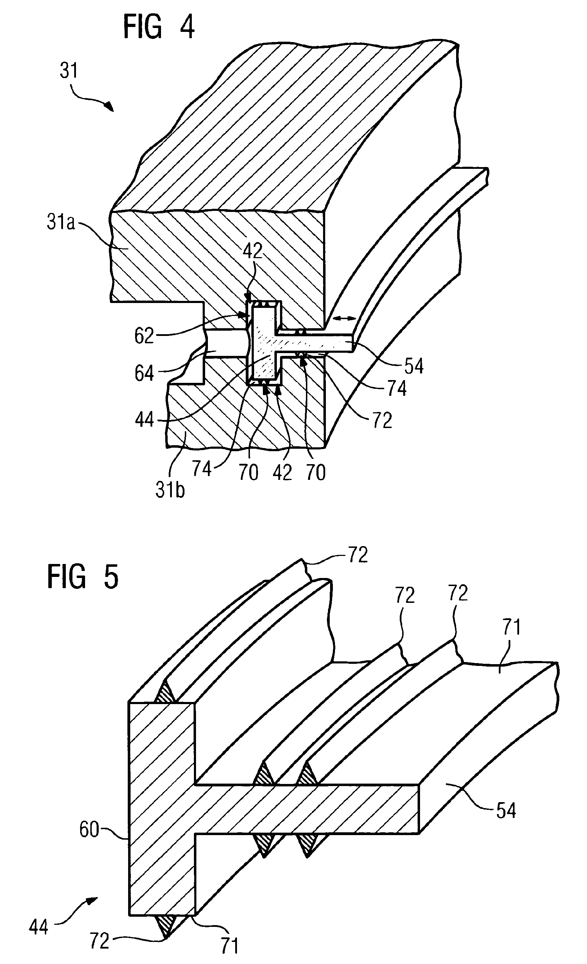

Das im Querschnitt kolbenartige oder hammerartige, im dargestellten Beispiel ringförmig umlaufende Absperrelement 44 (FIG 5) weist eine spaltseitig angeordnete Dichtstruktur 54 auf, die einem in der Stirnseite 52 des zweiten Wandabschnitts 32 angeordneten Dichtbereich 56 gegenüberliegt.

Ferner umfasst das Absperrelement 44 eine Kolbenfläche 60, die dem Querschnitt des Kolbenraums 62 entspricht, welcher im ersten Wandabschnitt 31 zwischen den beiden Teilelementen 31a, 31b vorgesehen ist. Dem Kolbenraum 62 ist von der Rückseite 63 des Wandabschnittes 31 her über einen spalt- oder bohrungsförmigen Zuführkanal 64 ein Druckmedium D, vorzugsweise Verdichterendluft, zuführbar, welche üblicherweise ohnehin dem beispielsweise als metallisches Hitzeschild ausgeführten Wandabschnitt 31 zu dessen Kühlung rückseitig - bezogen auf das Heißgas - beaufschlagt. Als Zuführkanal 64 kann beispielsweise auch die Fuge 46 genutzt werden.

Bei der so vorgeschlagenen Verwendung der Spaltsperrvorrichtung 50 in der Gasturbine 1 ist das Absperrelement 44 in Axialrichtung des Rotors 3 verschiebbar. Aufgrund der betriebsbedingten Temperaturschwankungen bewegen und/oder dehnen sich die am Spalt beteiligten Wandabschnitte 31, 32, so dass der stirnseitige Abstand zwischen den beiden Wandabschnitten 31, 32, das Spaltmaß B, variieren kann. Beispielsweise nach dem Starten der kalten Gasturbine verkleinert sich der Spalt aufgrund von Temperaturdehnungen. Die Variation des Spaltmaßes B kann dabei so groß sein, dass rein statische oder auch federnde Dichtelemente nicht in der Lage sind, die Bewegungen der Wandabschnitte unter Aufrechterhaltung einer ausreichenden Dichtigkeit dauerhaft zu kompensieren.

Um eine zuverlässige Abdichtung des Spaltes 34 für jeden Zeitpunkt während des Betriebes zu erzielen, ist das Absperrelement 44 als Dichtelement am Dichtbereich 56 des zweiten Wandabschnittes 32 anpressbar.

Der dazu nötige Anpressdruck wird von dem Druckmedium D erzielt, welches dem Hub- oder Kolbenraum 62 über den Zuführkanal 64 zuführbar ist und in diesem auf die Kolbenfläche 60 des Absperrelementes 44 zu dessen Verschiebung in Richtung des gegenüberliegenden Wandabschnittes 32 einwirkt.

Der Druck p₁ des Druckmediums D ist so gewählt, dass dieser größer ist als der im Spalt auftretende Druck p₂ bzw. p₃. Dadurch ist es möglich, dass das in der Fuge 46 angeordnete Absperrelement 44 nach Art und Weise eines in der Nut 42 bewegbaren Kolbens teilweise aus dem ersten Wandabschnitt 31 heraus in Richtung des zweiten Wandabschnittes 32 unter Druck verschoben wird, damit seine Dichtstruktur 54 am Dichtbereich 56 während des Betriebs stets dicht, dabei vorzugsweise flächig anliegt. Der Druckunterschied zwischen Spalt 34 und Kolbenraum 62 sorgt somit für eine sich selbst an die Spaltgröße bzw. an das Spaltmaß B anpassende Dichtung, sofern der von der Größe des Kolbenraums 62 abhängige Verschiebeweg ausreichend groß gewählt worden ist.

Die Kanalwand 30 trennt die Heißgasströmung 38 gegenüber einem rückwärtigen Raum 66 ab, in dem Kühlluft geführt sein kann. Die Kühlluft weist den Druck p₂ auf, der vorzugsweise geringer ist als der des zum Nachführen des Absperrelements 44 eingesetzten Druckmediums D, jedoch größer ist als der im Spalt 34 heißgasseitige Druck p₃ des Heißgases 11. Falls zwischen Dichtstruktur 54 und Dichtbereich 56 doch eine geringfügige oder auch bedeutsame Undichtigkeit auftritt, kann durch die gewählten Druckverhältnisse ein Leckagestrom aus dem Raum 66 durch den Spalt 34 ausströmen, welcher das nachteilige Eindringen von Heißgas 11 unterstützend wirkungsvoll verhindert.

Um eine besonders verbrauchsarme Nutzung des Druckmediums D zu erreichen, ist das Absperrelement 44 mit einer Gleitdichtung 70 im ersten Wandabschnitt 31 gelagert. Die Gleitdichtung 70 schließt den Kolbenraum 62 gegenüber dem Spalt 34 zumindest teilweise ab und umfasst Dichtspitzen 72, die entweder an Seitenflächen 71 des Absperrelements 44, so wie es in FIG 5 in perspektivischer Ansicht zu sehen ist, oder an diesen gegenüberliegenden, inneren Flächen 74 des Wandabschnitts 31 vorgesehen sein können. Eine ungewollt oder unzulässig große Leckage von Druckmedium D, welches aus dem Kolbenraum 62 ungenutzt in den Spalt 34 einströmt, kann somit vermieden werden.

Wie auch aus der perspektivischen Teilansicht der FIG 4 hervorgeht, können die beiden Wandabschnitte 31, 32 zumindest Teil einer im axialen Querschnitt ringförmig umlaufenden Kanalwand 30 sein, die beispielsweise den Übergang von einer Ringbrennkammer 6 in den Heißgaskanal 18 der Gasturbine 1, begrenzen, vorzugsweise im Bereich des in der FIG 1 mit II gekennzeichneten Ausschnitt II. Im Umfangsrichtung können sowohl die Wandabschnitte 31, 32 der ringförmigen Kanalwand 30 als auch das Absperrelement 44 segmentiert sein. Daneben sind andere Anwendungsgebiete innerhalb der Gasturbine denkbar, beispielsweise an den Übergangsbereichen zwischen Plattformen von Leitschaufeln und den dazu axial benachbart angeordneten Führungsringen, welche Laufschaufeln gegenüberliegenden.

Demzufolge wird mit der Erfindung eine mittels des druckbetätigten Absperrelements sich anpassende Dichtung oder Absperreinrichtung für einen Spalt geschaffen, die sich selbsttätig auf eine variable Spaltgröße einstellt, um die den Spalt gegen Heißgaseinzug schützenden Leckagemengen an Sperrluft zu reduzieren.

## Patentansprüche

1. Gasturbine (1),
mit einer eine Strömung (38) begrenzenden Kanalwand (30), die einen ersten und einen zweiten Wandabschnitt (31, 32) aufweist, wobei einer der Wandabschnitte (31) Teil einer Brennkammer (6) der Gasturbine (1) und der andere der Wandabschnitte (32) Teil eines ringförmigen Heißgaskanals (18) einer Turbineneinheit (8) ist und
wobei die zwei benachbarten Wandabschnitte (31, 32) unter Bildung eines Spaltes (34) einander stirnseitig gegenüberliegen, wobei
zum Abdichten des Spaltes (34) aus dem ersten Wandabschnitt (31) stirnseitig ein sich in den Spalt (34) erstreckendes und quer dazu verschiebbares Absperrelement (44) herausragt, **dadurch gekennzeichnet, dass** das Absperrelement eine im ersten Wandabschnitt (31) geführte Kolbenfläche (60) und
eine der Kolbenfläche (60) gegenüberliegende Dichtstruktur (54) umfasst,
die mittels eines auf die Kolbenfläche (60) einwirkenden Druckmediums (D) an einem stirnseitig angeordneten Dichtbereich (56) des zweiten Wandabschnittes (32) anpressbar ist.

2. Gasturbine (1) nach Anspruch 1,
bei der die Dichtstruktur (54) des Absperrelements (44) und der Dichtbereich (56) der Stirnseite (52) des zweiten Wandabschnittes (32) flächig aneinander liegen.

3. Gasturbine (1) nach Anspruch 1 oder 2,
bei der beide benachbarten Wandabschnitte (31, 32) Teil einer im Querschnitt ringförmigen Kanalwand (30) sind.

4. Gasturbine (1) nach Anspruch 1, 2 oder 3,
bei der das Absperrelement (44) einen im ersten Wandabschnitt (31) angeordneten Kolbenraum (62) mittels einer zwischen Absperrelement (44) und erstem Wandabschnitt (31) vorgesehenen Gleitdichtung (70) verschließt, um den für die Verschiebung an Anpressung an den Dichtbereich (56) erforderlichen Druckaufbau bezüglich des Druckmediums (D) verlustarm zu gewährleisten.

5. Gasturbine (1) nach einem der Ansprüche 1 bis 4,
bei der die Kolbenfläche (60) die Dichtstruktur (54) und der Kolbenraum (62) jeweils ringförmig ausgebildet sind.

6. Gasturbine (1) nach einem der Ansprüche 4 oder 5,
bei der die Gleitdichtung (70) mindestens eine am Absperrelement (44) oder im ersten Wandabschnitt (31) vorgesehene Dichtspitze (72) umfasst.

## Claims

1. Gas turbine (1),
with a passage wall (30) which delimits a flow (38) and which has a first and a second wall section (31, 32), wherein one of the wall sections (31) is part of a combustion chamber (6) of the gas turbine (1), and the other of the wall sections (32) is part of an annular hot gas passage (18) of a turbine unit (8), and wherein the two adjacent wall sections (31, 32) lie opposite each other on the end face side, forming a gap (34),
wherein,
for sealing the gap (34), a blocking element (44), which extends into the gap (34) and is displaceable transversely to it, projects from the first wall section (31) on the end face side, **characterized in that** the blocking element comprises a piston face (60), which is guided in the first wall section (31), and
a sealing structure (54), which lies opposite the piston face (60),
and which by means of a pressurized medium (D), which acts upon the piston face (60), can be pressed against a sealing section (56) of the second wall section (32) which is arranged on the end face side.

2. Gas turbine (1) according to Claim 1,
in which the sealing structure (54) of the blocking element (44) and the sealing section (56) of the end face (52) of the second wall section (32) lie flat against each other.

3. Gas turbine (1) according to Claim 1 or 2,
in which the two adjacent wall sections (31, 32) are part of a passage wall (30) which is annular in cross section.

4. Gas turbine (1) according to Claim 1, 2 or 3,
in which the blocking element (44) closes off a piston chamber (62), which is arranged in the first wall section (31), by means of a slide ring (70) which is provided between blocking element (44) and first wall section (31), in order to ensure in a low loss manner the pressure build-up, with regard to the pressurized medium (D), which is required for the displacement for pressing against the sealing section (56).

5. Gas turbine (1) according to one of Claims 1 to 4,
in which the piston face (60), the sealing structure (54) and the piston chamber (62) are annularly formed in each case.

6. Gas turbine (1) according to one of Claims 4 or 5,
in which the slide ring (70) comprises at least one seal-point (72) which is provided on the blocking element (44) or in the first wall section (31).

## Revendications

1. Turbine (1) à gaz,
comprenant une paroi (30) de canal qui délimite un courant (38)et qui a une première et une deuxième section (31, 32) de paroi, dans laquelle l'une des sections (31) de paroi fait partie d'une chambre (6) de combustion de la turbine (1) à gaz et l'autre des sections (32) de paroi fait partie d'un canal (18) annulaire pour du gaz chaud d'un groupe (8) de turbine et,
dans laquelle les deux sections (31, 32) voisines de paroi sont opposées du côté frontal l'une à l'autre en formant un intervalle (34), dans laquelle,
pour rendre étanche l'intervalle (34), fait saillie de la première section (31) de paroi du côté frontal un élément (44) de blocage s'étendant dans l'intervalle (34) et pouvant coulisser transversalement à celui-ci, **caractérisé en ce que** l'élément de blocage comprend une surface (60) de piston guidée dans la première section (31) de paroi et une structure (54) d'étanchéité opposée à la surface (60) de piston,
qui peut, au moyen d'un fluide (D) sous pression agissant sur la surface (60) de piston, être pressée sur une région (56) d'étanchéité disposée du côté frontal de la deuxième section (32) de paroi.

2. Turbine (1) à gaz suivant la revendication 1,
dans laquelle la structure (54) d'étanchéité de l'élément (44) de blocage et la région (56) d'étanchéité du côté (52) frontal de la deuxième section (32) de paroi sont appliquées l'une contre l'autre suivant une surface.

3. Turbine (1) à gaz suivant la revendication 1 ou 2,
dans laquelle deux sections (31, 32) voisines de paroi font partie d'une paroi (30) de canal annulaire en section transversale.

4. Turbine (1) à gaz suivant la revendication 1, 2 ou 3, dans laquelle l'élément (44) de blocage ferme un espace (62) pour un piston disposé dans la première section (31) de paroi au moyen d'une étanchéité (70) à glissement prévue entre l'élément (44) de blocage et la première section (31) de paroi pour assurer, sans perte par rapport au fluide (D) sous pression, l'établissement de la pression nécessaire au déplacement en pressant sur la région (56) d'étanchéité.

5. Turbine (1) à gaz suivant la revendication 1 à 4,
dans laquelle la surface (60) du piston, la structure (54) d'étanchéité et l'espace (62) pour le piston sont respectivement annulaires.

6. Turbine (1) à gaz suivant la revendication 4 ou 5,
dans laquelle l'étanchéité (70) à glissement comprend au moins une pointe (72) d'étanchéité prévue sur l'élément (44) de blocage ou dans la première section (31) de paroi.
